**Europäisches Patentamt**

**European Patent Office**

**Office européen des brevets**

(19)

(11) Numéro de publication : **0 133 160**
**B1**

(12) **FASCICULE DE BREVET EUROPÉEN**

(45) Date de publication du fascicule du brevet :
06.05.87

(51) Int. Cl.⁴ : **B 23 H   7/02**

(21) Numéro de dépôt : **84810329.7**

(22) Date de dépôt : **02.07.84**

(54) **Machine pour découper par électro-érosion.**

(30) Priorité : 27.07.83 CH 4112/83

(43) Date de publication de la demande :
13.02.85 Bulletin 85/07

(45) Mention de la délivrance du brevet :
06.05.87 Bulletin 87/19

(84) Etats contractants désignés :
DE FR GB

(56) Documents cités :
CH-A-   333 268

(73) Titulaire : **CHARMILLES TECHNOLOGIES SA**
**109, rue de Lyon**
**CH-1203 Genève (CH)**

(72) Inventeur : **Girardin, Roger**
**8, chemin de l'Echarpine**
**CH-1214 Vernier (Genève) (CH)**

(74) Mandataire : **Ardin, Pierre et al**
**PIERRE ARDIN & CIE 22, rue du Mont-Blanc**
**CH-1211 Genève 1 (CH)**

## Description

La présente invention concerne une machine pour découper par décharges érosives une pièce-électrode au moyen d'un fil-électrode tendu et défilant entre deux bras de guidage solidaires du bâti de la machine, cette dernière comportant une cuve remplie d'un liquide d'usinage à l'intérieur de laquelle est fixée la pièce-électrode et des moyens pour effectuer des déplacements relatifs dans deux directions différentes, de préférence orthogonales de cette cuve et de ces deux bras de guidage, la cuve comportant sur l'un de ses côtés au moins une ouverture par laquelle au moins l'un des bras traverse la paroi de la cuve et un dispositif empêchant le liquide d'usinage de s'écouler par ladite ouverture.

On connaît de telles machines qui comportent un joint sous forme d'un soufflet disposé entre la paroi de la cuve et le bras de guidage traversant la paroi, pour empêcher le liquide d'usinage de s'écouler. Les soufflets sont utilisés dans des machines où la cuve ne fait que récolter le liquide qui est aspergé dans la zone d'usinage. Ces soufflets sont inutilisables dans les machines où la cuve est remplie du liquide d'usinage du fait qu'ils se déforment sous l'effet de la pression du liquide exercée contre les parois de la cuve.

La présente invention a pour but de remédier à ces inconvénients et elle est caractérisée en ce que ledit dispositif est constitué par une plaque montée de façon coulissante suivant l'une desdites directions parallèlement à la paroi de la cuve et recouvrant ladite ouverture, la plaque étant traversée par au moins un des bras de guidage de manière à permettre son déplacement relatif suivant l'autre de cesdites directions, au moins un joint étant disposé entre la plaque et la paroi et au moins un autre joint étant prévu entre la plaque et le bras.

Selon une variante préférée de l'invention ladite paroi est constituée par deux panneaux parallèles entre lesquels coulisse la plaque traversée par l'un des bras de guidage, un joint flexible étant disposé entre chacune des faces de la plaque et le panneau correspondant et au moins un joint circulaire assurant l'étanchéité entre le bras de guidage et la plaque.

Le dessin annexé représente à titre d'exemple une forme d'exécution de la machine objet de l'invention.

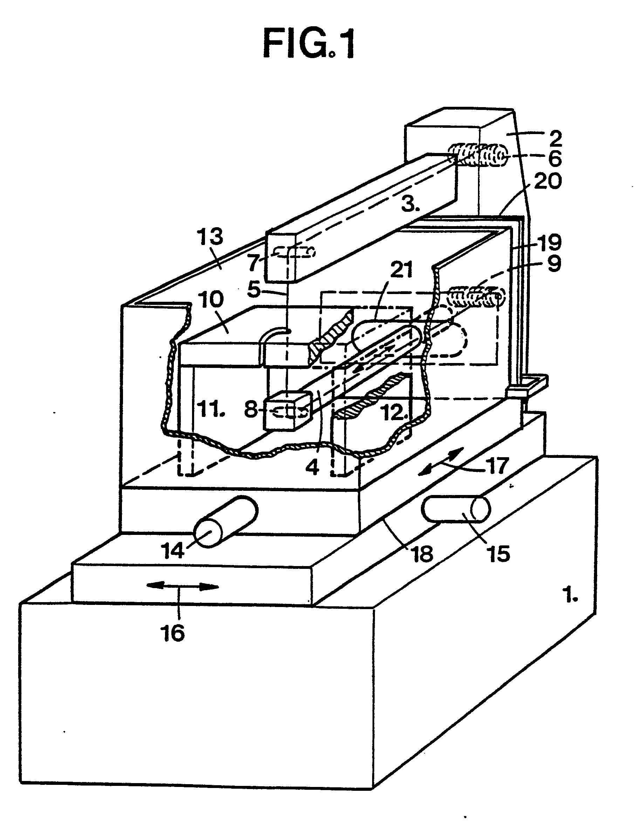

La figure 1 est une vue en perspective de la machine à électro-érosion.

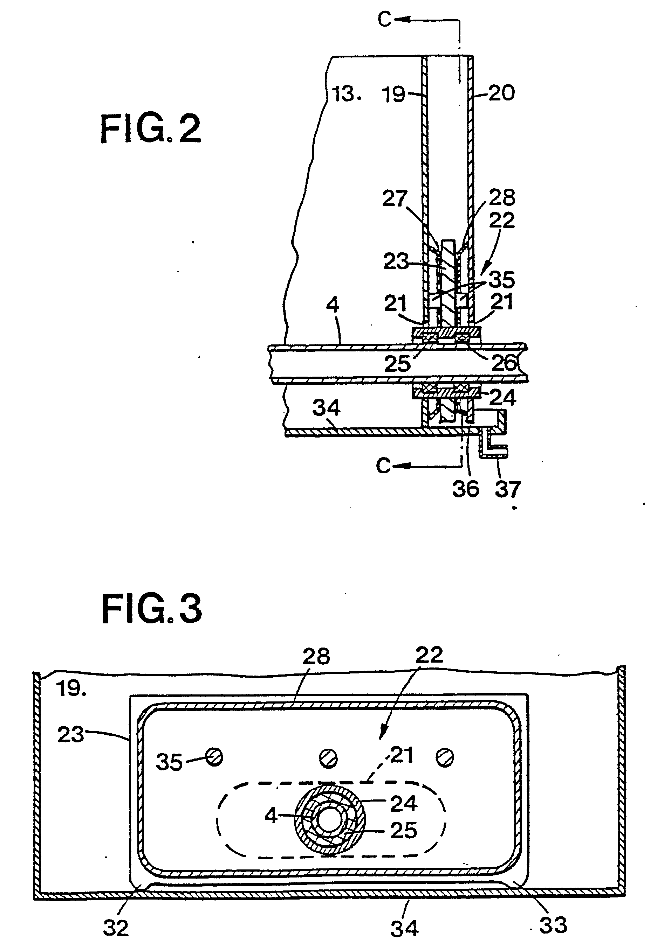

La figure 2 est une coupe à travers la paroi arrière de la cuve.

La figure 3 illustre une coupe suivant C-C de la figure 2.

La machine pour découper par décharges érosives comporte un bâti 1 avec un montant 2 portant deux bras de guidage 3 et 4. Un fil-électrode 5 est déroulé d'une bobine débitrice 6, passé sur des galets de renvoi 7 et 8 pour être enroulé sur une bobine réceptrice 9. Une électrode-pièce 10 est fixée sur des supports 11, 12 à l'intérieur d'une cuve 13 remplie d'un liquide d'usinage. Cette cuve 13 est solidaire d'une table à mouvements croisés 18 permettant d'effectuer des déplacements relatifs entre la pièce-électrode 10 et le fil-électrode 5 suivant deux directions orthogonales représentées par les flèches 16, 17. Cette table est entraînée par deux moteurs 14 et 15 commandés par une unité de commande numérique, non illustrée. La paroi arrière de la cuve 13 présente deux panneaux 19, 20 parallèles comportant une ouverture 21 permettant le passage du bras de guidage inférieur 4.

La machine comporte un dispositif 22 destiné à empêcher le liquide d'usinage de s'écouler par l'ouverture 21. Ce dispositif 22 comprend une plaque 23 montée de façon coulissante entre les deux panneaux 19, 20 et présentant un tube 24 traversant la plaque 23 dont il est rendu solidaire par soudure. Deux joints circulaires 25, 26 sont montés à l'intérieur du tube 24 pour assurer l'étanchéité entre ce tube 24 et le bras de guidage 4 coulissant dans ce tube suivant la direction indiquée par la flèche 17. Deux joints flexibles 27, 28 sont fixés sur les deux faces de la plaque 23 et permettent d'aveugler les fentes existant entre la plaque 23 et les deux panneaux 19, 20. Cette plaque 23 comporte en outre deux pièces d'appui 32, 33 susceptibles d'entrer en contact avec la base 34 de la cuve 13 et trois pièces de guidage 35 destinées à coopérer avec les deux panneaux 19, 20. A la base de ces derniers, la cuve 13 présente une gouttière 36 pour récolter les fuites des joints circulaires 25, 26 et flexibles 27, 28. Un conduit d'évacuation 37 permet de retourner le fluide récolté dans la cuve 13 grâce à une pompe, non illustrée.

En particulier la paroi arrière de la cuve 13 pourrait être constituée par un seul panneau. La plaque 23 pourrait, dans ce cas, coulisser entre deux glissières fixées à ce panneau. De même, les joints flexibles 27, 28 pourraient être remplacés par des joints d'une toute autre configuration.

Les deux bras de guidage du fil pourraient être munis du même dispositif dans le cas d'une machine où le fil serait déplacé horizontalement dans la cuve.

## Revendications

1. Machine pour découper par décharges érosives une pièce-électrode (10) au moyen d'un fil-électrode (5) tendu et défilant entre deux bras de guidage (3, 4) solidaires du bâti (1) de la machine, cette dernière comportant une cuve (13) remplie d'un liquide d'usinage à l'intérieur de laquelle est fixée la pièce-électrode (10) et des moyens (14, 15, 18) pour effectuer des déplacements relatifs dans deux directions différentes, de préférence orthogonales (16, 17) de cette cuve (13) et de ces deux bras de guidage (3, 4), la cuve (13) comportant sur l'un de ses côtés (19, 20) au moins une ouverture (21) par laquelle au moins l'un des bras (4) traverse la paroi de la cuve, caractérisée en ce qu'elle comprend une plaque (23) montée de façon coulissante suivant l'une desdites directions (16) parallèlement à ce côté (19, 20) de la cuve et recouvrant ladite ouverture (21), la plaque (23) étant traversée par au moins un des bras de guidage (3, 4) de manière à permettre son déplacement relatif suivant l'autre de ces directions (17), au moins un joint (27) étant disposé entre la plaque (23) et le côté (19, 20), et au moins un autre joint (25, 26) étant prévu entre la plaque (23) et le bras (4) pour empêcher le liquide d'usinage de s'écouler par ladite ouverture (21).

2. Machine selon la revendication 1, caractérisée en ce que ledit côté présente deux panneaux (19, 20) parallèles entre lesquels coulisse la plaque (23) traversée par l'un des bras de guidage (4), un joint flexible (27, 28) étant disposé entre chacune des faces de la plaque (23) et le panneau (19, 20) correspondant et au moins un joint circulaire (25, 26) assurant l'étanchéité entre le bras de guidage (4) et la plaque (23).

3. Machine selon la revendication 2, caractérisée en ce qu'elle comporte une gouttière (36) disposée à la base des panneaux (19, 20) parallèles pour récolter les fuites du ou des joints circulaires (25, 26) et celles du ou des joints flexibles (27, 28).

4. Machine selon la revendication 2, caractérisée en ce que la plaque (23) comporte des pièces d'appui (32, 33) susceptibles de coopérer avec la base de la cuve.

5. Machine selon la revendication 2, caractérisée en ce que la plaque (23) comporte sur ses deux faces des pièces de guidage (35) susceptibles de coopérer avec les deux panneaux (19, 20).

6. Machine selon l'une des revendications 2 à 5, caractérisée en ce qu'un tube (24) traverse la plaque (23), le tube (24) étant fixé à cette dernière de façon rigide et étanche, le bras de guidage (4) étant monté coulissant à l'intérieur de ce tube (24) dont la surface interne porte au moins un joint circulaire (25, 26).

## Claims

1. Machine for cutting by erosive discharges an electrode workpiece (10) by means of an electrode wire (5) stretched and travelling between two guiding arms (3, 4) solid with the frame (1) of the machine, said machine comprising a tank (13) filled with a machining fluid and inside which is fixed the electrode workpiece (10), and means (14, 15, 18) for displacing said tank (13) along two axes, preferably orthogonal to each other (16, 17), relative to said two guiding arms (3, 4), said tank (13) comprising on one of its walls (19, 20) at least one opening (21) through which at least one of said two arms (4) crosses the tank wall, characterized in that it comprises a plate (23) slidably mounted along one of said two axes (16) parallel to said tank wall (19, 20) and overlapping said opening (21), said plate (23) being passed through by at least one of said guiding arms (3, 4) such as to enable its relative displacement along the other of said directions (17), at least one seal (27) being disposed between the plate (23) and the tank wall (19, 20), and at least one other seal (25, 26) being provided between the plate (23) and the arm (4) to prevent the machining liquid from leaking through said opening (21).

2. Machine according to claim 1, characterized in that said tank wall presents two parallel panels (19, 20) between which slides said plate (23), one of said guiding arms (4) passing through said plate, a flexible seal (27, 28) being disposed between each of the faces of the plate (23) and the corresponding panel (19, 20), and at least one annular seal (25, 26) ensuring a fluid tight connection between the guiding arm (4) and the plate (23).

3. Machine according to claim 2, characterized in that it comprises a gutter (36) disposed below said parallel panels (19, 20) for collecting machining fluid leaking through one or both annular seals (25, 26) and through one or both flexible joints.

4. Machine according to claim 2, characterized in that the plate (23) comprises bearing members (32, 33) capable of working together with the bottom of said tank.

5. Machine according to claim 2, characterized in that the plate (23) comprises one each of its faces guiding means (35) capable of working together with the two panels (19, 20).

6. Machine according to one of claims 2 to 5, characterized in that a tubular member (24) passes through the plate (23), said tubular member (24) being affixed rigidly to said plate in a leakproof manner, the guiding arm (4) being slidably mounted inside this tubular member (24), the internal surface of this member bearing at least one annular seal (25, 26).

## Patentansprüche

1. Maschine zum funkenerosiven Schneiden einer Werkstück-Elektrode (10) mittels einer Draht-Elektrode (5), welche zwischen zwei mit dem Rahmen (1) der Maschine fest verbundenen Führungsarmen (3, 4) gespannt läuft, wobei die Maschine einen mit Arbeitsflüssigkeit gefüllten Behälter (13), in welchem die Werkstück-Elektrode (10) befestigt ist, und Mittel (14, 15, 18) aufweist, um relative Verschiebungen in zwei verschiedenen, vorzugsweise orthogonalen Richtungen (16, 17) zwischen diesem Behälter (13) und diesen zwei Führungsarmen (3, 4) zu erzeugen, und wobei der Behälter (13) auf einer seiner Seiten (19, 20) zumindest eine Oeffnung (21) aufweist, durch welche zumindest einer der Arme (4) die Behälterwand durchquert, dadurch gekennzeichnet, dass sie eine Platte (23) aufweist, welche gemäss einer dieser Richtungen (16) parallel zu dieser Seite (19, 20) des Behälters gleitend angebracht ist und die benannte Oeffnung (21) überdeckt, wobei die Platte (23) zumindest von einem der Führungsarme (3, 4) so durchquert wird, dass seine relative Verschiebung gemäss der anderen der zwei Richtungen (17) erlaubt wird, wobei zumindest eine Dichtung (27) zwischen der Platte (23) und der Seite (19, 20) angeordnet ist, und wobei zumindest eine andere Dichtung (25, 26) zwischen der Platte (23) und dem Arm (4) vorgesehen ist, um zu verhindern, dass die Arbeitsflüssigkeit aus der benannten Oeffnung (21) ausfliesst.

2. Maschine gemäss Anspruch 1, dadurch gekennzeichnet, dass die benannte Seite zwei parallele Wände (19, 20) aufweist, zwischen welchen die von einem der Führungsarme (4) durchquerte Platte (23) gleitet, wobei eine biegbare Dichtung (27, 28) zwischen jeder der Seiten der Platte (23) und der gegenüberliegenden Wand (19, 20) angeordnet ist, und wobei zumindest eine Runddichtung (25, 26) einen dichten Abschluss zwischen dem Führungsarm (4) und der Platte (23) erzeugt.

3. Maschine gemäss Anspruch 2, dadurch gekennzeichnet, dass sie eine an der Basis der parallelen Wände (19, 20) angeordnete Auffangrinne aufweist, um die entsprechende Flüssigkeit der Runddichtung(en) (25, 26) und der biegbaren Dichtung(en) (27, 28) aufzufangen.

4. Maschine gemäss Anspruch 2, dadurch gekennzeichnet, dass die Platte (23) Stützstücke (32, 33) aufweist, welche mit der Grundfläche des Behälters zusammenwirken.

5. Maschine gemäss Anspruch 2, dadurch gekennzeichnet, dass die Platte (23) auf beiden ihrer Seiten Führungsstücke (35) aufweist, welche mit den beiden Wänden (19, 20) zusammenwirken.

6. Maschine gemäss einem der Ansprüche 2 bis 5, dadurch gekennzeichnet, dass ein Rohr (24) die Platte (23) durchquert, wobei das Rohr (24) starr und dicht an die letztere befestigt ist, und wobei der Führungsarm (4) gleitend in dem Rohr (24) angeordnet ist, dessen innere Oberfläche zumindest eine Runddichtung (25, 26) trägt.

FIG.1

0 133 160

# FIG.2

# FIG.3